# FASCICULE DE BREVET EUROPEEN

(11) **EP 0 930 807 B1**
(45) Date de publication et mention de la délivrance du brevet: **28.07.2004**
(21) Numéro de dépôt: 98122878.6
(22) Date de dépôt: 02.12.1998
(51) Int. Cl.: H05B 3/84, H05B 3/86

(54) **Vitrage chauffant**
Scheibenheizung
Heated window

(30) Priorité: 14.01.1998 CH 5698
(43) Date de publication de la demande: 21.07.1999
(73) Titulaire: VERRES INDUSTRIELS SA., CH-2740 Moutier (CH)
(72) Inventeur: Seravalli, Alexandre c/o Verres Industriels S.A., 2740 Moutier (CH)
(74) Mandataire: Blum, Rudolf Emil Ernst

(56) Documents cités:
- EP-A- 0 506 521
- EP-A- 0 559 035
- DE-B- 1 629 548
- GB-A- 2 091 529

## Description

L'invention se rapporte à un vitrage chauffant feuilleté comprenant un réseau de fils de résistance électriques fins immobilisés entre deux plaques de verre. Ce genre de vitrage sert à fabriquer des parois transparentes chauffantes pour les véhicules sur rail ou sur route, les bateaux, les bâtiments et/ou certaines installations industrielles. Le vitrage chauffant comporte en général d'une part des fils de résistance fins que l'on chauffe par passage de courant électrique et au moins deux conducteurs formant collecteurs d'alimentation et devant par conséquent avoir une plus grande conductibilité, pour l'amenée et la sortie du courant de chauffage. Ces conducteurs, en général disposés le long des bords du vitrage pour être le moins voyant possible, transportent le courant de chauffage depuis une prise d'entrée ou de sortie jusqu'à l'une ou l'autre extrémité des fils fins qu'il s'agit de chauffer par passage du courant. Les collecteurs doivent donc présenter plusieurs propriétés en partie contradictoires : avoir une section relativement importante puisque le courant pour tous les fils chauffant passe en général par un collecteur unique; être peu visible; pouvoir être facilement pliés sans augmenter notablement d'épaisseur pour suivre le contour du vitrage même près des coins de celui-ci; permettre de réaliser simplement une bonne connection électrique entre de multiples points d'un collecteur et une extrémité de chaque fil de chauffage.

Une solution connue consiste à utiliser comme collecteur deux minces bandes métalliques plates superposées appelées clinquants, entre lesquelles les extrémités des fils chauffant sont prises en sandwich. Toutefois ces clinquants acceptent mal les faibles rayons de courbure qu'il est parfois nécessaire de leur donner, en particulier près de la prise de courant ou à proximité d'un coin du vitrage. De plus, la relativement grande largeur du clinquant le rend particulièrement bien visible, ce qui est presque toujours indésirable. C'est pourquoi le document EP 506 521 A1 propose de remplacer les clinquants par une tresse conductrice plate constituée de plusieurs torons eux-mêmes constitués de plusieurs fils métalliques chacun. Bien qu'évidemment plus souple que la superposition de deux clinquants, une telle tresse est plus complexe à fabriquer et ne permet pas de presser l'extrémité de chaque fil chauffant contre plusieurs surfaces conductrices pour assurer un contact électrique assez bon pour garantir une alimentation uniforme de tous les fils chauffant. Finalement, les jeux de lumière sur les torons entremêlés d'une tresse peuvent rendre celle-ci trop voyante sous certaines conditions; c'est pourquoi le document EP 506 521 A1 prévoit de la masquer le cas échéant par un contour opaque, ce qui complique la fabrication du vitrage et n'est pas toujours esthétique.

L'invention vise à éliminer ces inconvénients tout en sauvegardant la plus grande souplesse obtenue par l'utilisation de fils au lieu de clinquants. A cet effet, l'invention est définie comme il est dit à la revendication 1. Outre qu'il évite les inconvénients mentionnés plus haut, cet agencement se prête particulièrement bien à la fabrication automatique du vitrage, est facile à réaliser et esthétiquement plus discret que les solutions connues.

Une certaine longueur d'une ou des deux extrémités du collecteur peut dépasser hors du vitrage, par exemple sur la tranche de ce dernier, afin d'être raccordée de façon usuelle à un circuit d'alimentation électrique, soit par soudure, soit au moyen d'une connexion amovible. Dans une réalisation préférée de l'invention, au moins un collecteur se termine par une fiche mâle ou femelle emprisonnée dans une cavité ménagée dans l'une ou dans les deux plaques de verre, du côté où elles se font face. Ceci évite les efforts mécaniques sur le collecteur lorsqu'il est connecté avec un circuit d'alimentation ou déconnecté de celui-ci. La fiche peut soit n'être qu'encastrée dans la cavité, soit y être fixée par une résine durcissable. Dans ce dernier cas il n'est pas nécessaire que la cavité présente un étranglement à sa sortie pour retenir mécaniquement la fiche.

L'invention sera maintenant illustrée par la description de quelques formes de réalisation et à l'aide du dessin, dans lequel
la figure 1 est une vue en plan, partielle et schématique d'un vitrage selon l'invention;
la figure 2 est une section partielle selon II-II du vitrage de la figure 1;
la figure 3 représente schématiquement une section parallèle à la surface du vitrage à travers une douille de connexion fixée à une extrémité d'un collecteur dans le cas où le raccordement adopté consiste en un connecteur logé dans un évidement du vitrage, et
la figure 4 est similaire à la figure 3 mais représente une fiche au lieu d'une douille.

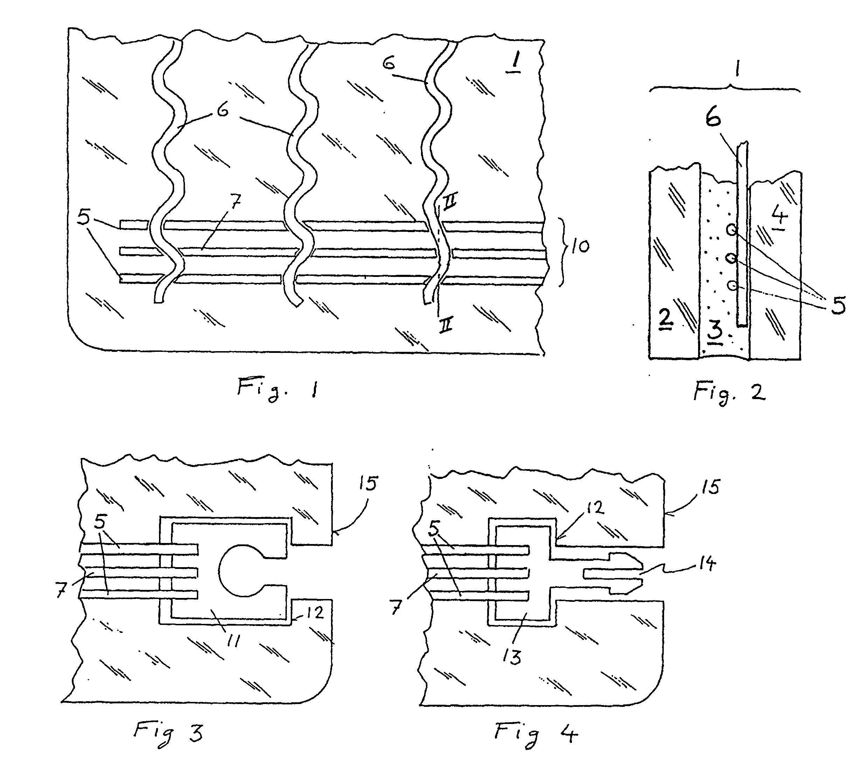

Les figures 1 et 2 représentent un vitrage feuilleté chauffant 1 comportant deux feuilles de verre 2, 4 réunies par une mince couche intercalaire 3 généralement formée par une matière thermoplastique tel le polyvinylbutyral ou un polyuréthane, cette couche pouvant par exemple avoir une épaisseur d'environ 0,8 mm. Lors de la fabrication du vitrage des fils chauffants 6 ayant une résistance électrique appropriée (par exemple des fils de tungstène d'environ 20µm de diamètre) sont déposés dans des sillons gravés par chauffage sur une surface de la couche intercalaire 3, surface ensuite recouverte par la plaque de verre 4. Dans l'exemple décrit ici les fils de chauffage sont des fils ondulés agencés à la verticale et alimentés à chaque extrémité (dont une seule est montrée) par un collecteur 10 composé de trois fils 5, essentiellement parallèles les uns aux autres et pouvant par exemple être réalisés en cuivre. Dans la réalisation préférée montrée ici les trois fils d'alimentation 5 passent sous les fils de chauffage 6 comme on le voit à la figure 2 et sont calés dans des sillons creusés dans la couche intercalaire 3. Il est toutefois également possible de faire passer les fils d'alimentation au-dessus des fils de chauffage. Pour des raisons de commodité la section des fils d'alimentation sera de préférence circulaire comme il est montré au dessin, mais une section différente, par exemple carrée, rectangulaire ou oblongue est également possible, la plus grande dimension de cette section n'excédant de préférence pas le double de sa plus petite dimension.

Le calage des fils d'alimentation dans des sillons facilite la fabrication du vitrage chauffant, au cours de laquelle les fils d'alimentation 5 seront mis en place avant la pose (aussi appelée couture) des fils de chauffage 6. La pose des fils d'alimentation peut être effectuée de manière similaire à celle des fils de chauffage et au moyen d'un appareillage du même type que celui servant à la pose de ces fils de chauffage, ce qui simplifie notablement la fabrication. De plus, d'éventuels passages à faible rayon de courbure au voisinage des coins du vitrage sont aussi faciles à réaliser qu'avec un collecteur en forme de tresse, sans créer aucune surépaisseur. Chaque jonction peut ensuite être rendue permanente par soudure. La superposition des fils ainsi réalisée ne simplifie pas seulement la fabrication mais permet en outre d'exercer une pression réciproque bien déterminée entre les fils de chauffage d'une part et d'alimentation de l'autre, sans risque d'écraser - comme cela est le cas lorsqu'on utilise une tresse d'alimentation - les fils d'alimentation, plus mous que les fils de chauffage, les uns contre les autres. La pression spécifique désirée par mm² peut être obtenue de façon précise par un réglage de la pression globale exercée sur chaque jonction, mais aussi par un choix judicieux de l'écartement entre les fils d'alimentation 5, de leur diamètre et de celui des fils de chauffage 6. Si les deux feuilles de verre du vitrage terminé sont maintenues l'une contre l'autre avec une force suffisante, on peut se contenter d'une soudure très légère, ou éventuellement renoncer à toute soudure. Il est entendu que le nombre des fils d'alimentation ainsi que leur disposition à l'endroit de la jonction peuvent différer de l'exemple décrit.

L'autre extrémité (non représentée) des fils de chauffage est connectée de manière analogue à un collecteur similaire (également non représenté), et chaque collecteur est agencé de manière à pouvoir être connecté à une source d'alimentation en courant extérieure au vitrage. A cet effet on peut munir au moins une extrémité du collecteur d'une cosse en forme de fiche ou de douille pouvant être enfichée avec une pièce complémentaire prévue à l'extrémité d'un conducteur extérieur au vitrage amenant le courant de chauffage jusqu'à celui-ci. Cette extrémité du collecteur, munie ou non d'une cosse, peut dépasser hors du vitrage pour être connectée de manière usuelle à un circuit d'alimentation. Dans une forme d'exécution préférée de l'invention le collecteur se termine par un élément de connexion emprisonné dans un évidement ménagé à l'intérieur du vitrage et comportant une embouchure le rendant accessible de l'extérieur.

L'élément de connexion peut être fixé dans l'évidement au moyen d'un adhésif ou d'une résine durcissable telle qu'époxyde, acrylique ou autre, et dans ce cas l'évidement pourra être une simple encoche débouchant par exemple sur la tranche du vitrage. Dans une autre forme d'exécution, l'élément de connexion est retenu de façon mécanique dans l'évidement par la forme de celui-ci, dont l'embouchure comportera à cet effet de préférence un étranglement empêchant la sortie de l'élément de connexion; cette forme d'exécution sera maintenant brièvement décrite à l'aide des figures 3 et 4.

Les figures 3 et 4 montrent des coupes à travers deux formes d'exécution préférées pour une cosse enfichable du collecteur 10. Cette cosse se présente sous forme d'une pièce plate formant une douille (fig. 3) ou une fiche (fig. 4) suffisamment mince pour pouvoir être encastrée dans une cavité ménagée soit du côté intérieur d'une des feuilles de verre, soit dans les deux côtés se faisant face des feuilles. Cette cavité possède une embouchure débouchant sur la tranche 15 du vitrage et qui présente un étranglement 12 emprisonnant la cosse dans la cavité. La douille ou la fiche du collecteur peut être prévue pour être enfichée avec une cosse complémentaire (non représentée) d'amenée de courant, et comporter à cet effet des moyens élastiques pour maintenir à force cette cosse d'amenée ou être conformée pour être encliquetée avec la cosse d'amenée de courant de façon à maintenir celle-ci mécaniquement. La figure 4 montre à titre d'exemple une fente 14 ménagée dans la fiche pour permettre d'encliqueter celle-ci. Dans ce cas il peut être avantageux de prévoir un moyen connu pour libérer l'encliquetage, ce qui sera en général plus facile si la pièce élastique commandant l'encliquetage est située sur la cosse de l'amenée de courant plutôt que sur la cosse du collecteur prise dans le vitrage. Dans tous les cas, le maintien de cette dernière à l'intérieur du vitrage évite tout endommagement du collecteur et de sa cosse, particulièrement à la jointure toujours fragile de ces deux éléments lors de la manipulation du vitrage et de son transport. Si on le désire, on peut aussi prévoir à la fois un encollage et une retenue mécanique de la cosse du collecteur dans sa cavité. Finalement, la simplicité de cette connexion permet le cas échéant d'en prévoir une à chaque extrémité de chaque collecteur, par exemple du côté droit et du côté gauche d'un pare-brise destiné à différents types de carrosserie.

## Revendications

1. Vitrage chauffant (1) comportant un réseau de fils (6) chauffant disposés entre deux plaques de verre (2, 4) et destinés à être chauffés par effet Joule, ainsi qu'au moins un collecteur (10) en contact avec plusieurs fils chauffant afin d'alimenter ceux-ci en courant électrique, **caractérisé en ce que** le collecteur comporte plusieurs fils d'alimentation (5) séparés disposés essentiellement parallèlement les uns aux autres, et qu'à la jonction du collecteur avec chaque fil chauffant ces fils d'alimentation passent tous du même côté de ce fil chauffant.

2. Vitrage selon la revendication 1 avec au moins deux plaques de verre séparées par une couche en un matériau thermoplastique (3), **caractérisé en ce que** les jonctions du collecteur avec les fils chauffants sont placées près de la frontière entre une des plaques de verre et la couche thermoplastique intercalaire séparant les deux plaques, les fils du collecteur passant du côté de cette dernière et les fils chauffants du côté de la plaque de verre.

3. Vitrage selon une des revendications 1 ou 2, **caractérisé en ce que** le contact entre les fils d'alimentation et les fils chauffants est obtenu par pression des plaques de verre.

4. Vitrage selon une des revendications 1 ou 2, **caractérisé en ce que** le contact entre les fils d'alimentation et les fils chauffants est obtenu par soudure.

5. Vitrage selon une des revendications précédentes, **caractérisé en ce qu'**au moins un collecteur comporte à au moins une de ses extrémités une fiche (11) ou une douille (13) de connexion emprisonnée dans une cavité ménagée dans l'une ou dans les deux plaques de verre du côté ou elles se font face et débouchant sur une tranche du vitrage.

6. Vitrage selon la revendication 5, **caractérisé en ce que** la fiche ou la douille est mécaniquement encliquetable avec une cosse complémentaire terminale d'un conducteur d'amenée de courant extérieur au vitrage.

7. Vitrage selon la revendication 5, **caractérisé en ce que** la fiche ou la douille est agencée pour être enfichée et retenue à force sur une cosse complémentaire terminale d'un conducteur d'amenée de courant extérieur au vitrage.

8. Vitrage selon une des revendications 5 à 7, **caractérisé en ce que** la fiche ou la douille est fixée dans la cavité par un adhésif ou une résine durcissable.

9. Vitrage selon une des revendications 1 à 4, **caractérisé en ce qu'**au moins une extrémité du collecteur dépasse hors du vitrage pour être connectée à un circuit d'alimentation.

10. Vitrage selon une des revendications 2 à 9, **caractérisé en ce que** les fils d'alimentation sont placés sur la plus grande partie de leur longueur dans des sillons creusés dans la couche intercalaire.

11. Vitrage selon une des revendications précédentes, **caractérisé en ce que** le rapport de la plus grande à la plus petite dimension de la section des fils d'alimentation ne dépasse pas 2.

## Patentansprüche

1. Heizbare Verglasung (1) mit einem Gitter von zwischen zwei Glasscheiben (2, 4) liegenden Heizdrähten (6), die vorgesehen sind, um durch Joule-Effekt geheizt zu werden, und mit mindestens einer Sammelleitung (10) die mit mehreren Heizdrähten verbunden ist, um diese mit Strom zu versorgen, **dadurch gekennzeichnet, dass** die Sammelleitung mehrere getrennte, im wesentlichen zueinander parallele Leiter (5) aufweist, und dass an den Kontaktstellen der Sammelleitung mit den einzelnen Heizdrähten alle Leiter auf derselben Seite des betreffenden Heizdrahtes verlaufen.

2. Heizbare Verglasung nach Anspruch 1, mit mindestens zwei durch eine Schicht (3) aus thermoplastischem Material getrennten Glasscheiben, **dadurch gekennzeichnet, dass** die Kontaktstellen der Sammelleitung mit den Heizdrähten im Bereich der Grenze zwischen der einen Scheibe und der beide Scheiben trennenden, thermoplastischen Zwischenschicht angeordnet ist, wobei die Leiter auf der Seite der Zwischenschicht, und die Heizdrähte auf der Seite der einen Scheibe verlaufen.

3. Heizbare Verglasung nach Anspruch 2, **dadurch gekennzeichnet, dass** der Kontakt zwischen den Leitern und den Heizdrähten durch den Druck beider Glasscheiben erzielt wird.

4. Heizbare Verglasung nach Anspruch 1 oder 2, **dadurch gekennzeichnet, dass** der Kontakt zwischen den Leitern und den Heizdrähten durch Löten oder Schweissen erzielt wird.

5. Heizbare Verglasung nach einem der vorangehenden Ansprüche, **dadurch gekennzeichnet, dass** mindestens eine Sammelleitung an mindestens einem ihrer Enden einen Anschlussstecker (11) oder eine Anschlussbuchse (13) aufweist, der oder die in einer Höhlung untergebracht ist welche in der gegen die andere Scheibe gerichteten Seite der einen oder beider Glasscheiben ausgespart ist, wobei die Höhlung an der Schnittseite der Verglasung ins Freie mündet.

6. Heizbare Verglasung nach Anspruch 5, **dadurch gekennzeichnet, dass** der Stecker oder die Buchse eingerichtet ist, um mechanisch mit einem komplementären, am Ende einer elektrischen Versorgungsleitung für die Verglasung angebrachten Kabelschuh einzuschnappen.

7. Heizbare Verglasung nach Anspruch 5, **dadurch gekennzeichnet, dass** der Stecker oder die Buchse eingerichtet ist, um durch eine kraftschlüssige Steckverbindung mit einem am Ende einer elektrischen Versorgungsleitung für die Verglasung angebrachten Kabelschuh verbunden zu werden.

8. Heizbare Verglasung nach einem der Ansprüche 5 bis 7, **dadurch gekennzeichnet, dass** der Stecker oder die Buchse mittels Leim oder eines gehärteten Harzes in der Höhlung festgehalten ist.

9. Heizbare Verglasung nach einem der Ansprüche 1 bis 4, **dadurch gekennzeichnet, dass** mindestens ein Ende der Sammelleitung aus der Verglasung herausragt, um an einem elektrischen Versorgungskreis angeschlossen zu werden.

10. Heizbare Verglasung nach einem der Ansprüche 2 bis 9, **dadurch gekennzeichnet, dass** die Leiter über den grösseren Teil ihrer Länge in Nuten eingelegt sind, die in der Zwischenschicht ausgespart sind.

11. Heizbare Verglasung nach einem der vorangehenden Ansprüche, **dadurch gekennzeichnet, dass** das Verhältnis der grössten zur kleinsten Ausdehnung des Querschnittes der Leiter den Wert 2 nicht überschreitet.

## Claims

1. Heatable glazing (1) with a lattice of heating wires (6) placed between two glass panels in order to be heated by Joule effect, and with at least one collector (10) contacting several heating wires for supplying them with electrical current, **characterized in that** the collector comprises several distinct supply wires (5) arranged essentially parallel to one another, and **in that** at the junction between the collector and each heating wire all supply wires pass on the same side of the heating wire.

2. Heatable glazing according to claim 1 comprising at least two glass panels separated by an intermediate thermoplastic layer (3), **characterized in that** the junctions between the collector and the heating wires lie near the boundary between one glass panel and the thermoplastic layer which separates both panels, and that at the junctions the supply wires pass on the side of the thermoplastic layer and the heating wires on the side of the glass panel.

3. Heatable glazing according to claim 1 or 2, **characterized in that** the contact between the supply wires and the heating wires is ensured by the pressure exerted by the glass panels.

4. Heatable glazing according to claim 1 or 2, **characterized in that** the contact between the supply wires and the heating wires is ensured by welding or soldering.

5. Heatable glazing according to any preceding claim, **characterized in that** at least one collector comprises at least one of its ends a connecting plug (13) or socket (11) encased in a cavity provided in either panel or in both on the side or sides where they face each other, which cavity has a mouth that opens on the edge of the glazing.

6. Heatable glazing according to claim 5 **characterized in that** the plug or socket can be mechanically latched to a complementary terminal connecting piece of an electrical supply conductor supplying current to the glazing from an outside source.

7. Heatable glazing according to claim 5 **characterized in that** the plug or socket can be linked by friction with a complementary terminal connecting piece of an electrical supply conductor supplying current to the glazing from an outside source.

8. Heatable glazing according to one of claim 5 to 7, **characterized in that** the plug or socket is immobilized within the cavity by a glue or a cured resin.

9. Heatable glazing according to one of claims 1 to 4 **characterized in** thaat at least one end of the collector protrudes from the glazing in order to be connected to a supply circuit.

10. Heatable glazing according to one of claims 2 to 9 **characterized in that** the major part of the length of the supply wires is sunk in grooves provided in the intermediate layer.

11. Heatable glazing according to any preceding claim, **characterized in that** the ratio of the greatest width to the smallest width of the cross-section of the supply wires does not exceed 2.
